# EUROPEAN PATENT SPECIFICATION

(11) **EP 3 316 694 B1**
(45) Date of publication and mention of the grant of the patent: **10.04.2019**
(21) Application number: 16732647.9
(22) Date of filing: 28.06.2016
(51) Int. Cl.: A23C 11/08, A23L 9/20, A23L 29/256, A23L 29/262, A23L 29/269

(54) **CREAMERS WITH IMPROVED TEXTURE/MOUTHFEEL AND METHOD OF MAKING THEREOF**
KAFFEEWEISSER MIT VERBESSERTER TEXTUR/VERBESSERTEM MUNDGEFÜHL UND VERFAHREN ZUR HERSTELLUNG DAVON
SUCCÉDANÉS DE CRÈME À TEXTURE/SENSATION EN BOUCHE AMÉLIORÉE ET LEUR PROCÉDÉ DE FABRICATION

(30) Priority: 30.06.2015 US 201562186963 P
(43) Date of publication of application: 09.05.2018
(73) Proprietor: Nestec S.A., 1800 Vevey (CH)
(72) Inventor: FU, Jun-Tse, Dublin, Ohio 43016 (US); BURNS, Sue, North Lewisburg, Ohio 43060 (US); SHER, Alexander A., Dublin, Ohio 43017 (US)
(74) Representative: Krishnan, Sri
(86) International application number: PCT/EP2016/064992
(87) International publication number: WO 2017/001392

(56) References cited:
- WO-A1-2010/091871
- WO-A1-2011/064167
- WO-A1-2012/010378
- WO-A2-2005/117607

## Description

### Field of the invention

The present invention relates to coffee creamers and the method to produce the same. More specifically, the present disclosure is directed to creamers with improved texture/mouthfeel.

### Background of the invention

Creamers are widely used as whitening agents with hot and cold beverages such as, for example, coffee, cocoa, tea, etc. They are commonly used in place of milk and/or dairy cream. Creamers may come in a variety of different flavours and provide mouthfeel, body, and a smoother texture. Creamers can be in liquid or powder forms. A liquid creamer may be intended for storage at ambient temperatures or under refrigeration, and should be stable during storage without phase separation, creaming, gelation and sedimentation. The creamer should also retain a constant viscosity over time. When added to cold or hot beverages such a coffee or tea, the creamer should dissolve rapidly, provide a good whitening capacity, and remain stable with no feathering and/or sedimentation while providing a superior taste and mouthfeel. Mouthfeel also denoted richness, texture or creaminess, is usually provided by the oil emulsion present in the creamer.

This, it is critical not only enhance texture/mouthfeel of coffee with creamers but also have stable liquid coffee creamers as is without compromising creamer stability over shelf life (at least 6 months at refrigeration and ambient temperatures for aseptic products).

All previous attempts to increase texture/mouthfeel of liquid creamers had the following drawbacks:
- High viscosity of liquid creamers resulted in poor pour-ability from the bottle
- Dripping-back liquid stream during pouring
- Phase separation (gelation, serum formation) during shelf life
PCT Patent Applications 2010/091871 , 2011/064167 and 2012/010378 all describe liquid non-dairy creamers comprising an oil, a caseinate salt, an emulsifier and a hydrocolloid.

The present invention relates to stabilizing systems and composition of non-dairy shelf-stable aseptically packaged liquid creamers, and to the process of making thereof.

### Summary of the Invention

The present invention now solves the foregoing problems by providing a stable beverage composition having enhanced or improved organoleptic properties.

Provided is composition of aseptic shelf-stable liquid creamers, formed by the interaction of oil(s)/fat(s), protein(s), hydrocolloids, and optionally sweetener(s), flavor(s), and stabilized by the use of complex systems containing the combinations of hydrocolloid(s) and emulsifier(s).

In a first aspect, the invention relates to a ready to creamer comprising a liquid non-dairy creamer composition comprising high oleic oils; caseinate salts; emulsifiers; and wherein further characterized in that the creamer comprises hydrocolloids comprising lambda-carrageenan, high acyl gellan gum and carboxymethyl cellulose wherein the lambda-carrageenan ranges from 0.02 to 0.1 wt/wt%, high acyl gellan gum ranges from 0.23 to 0.28 wt/wt% and carboxymethyl cellulose ranges from 0.04 to 0.12 wt/wt% of the creamer.

The aseptic creamers are shelf-stable at 20°C for at least 6 months, 3 months at 30°C, and 1 month at 38°C.

The creamers are easily dispersible in coffee, stable in hot and cold acidic environment, without feathering, breaking emulsion, de-oiling, flocculation and sedimentation. When added to coffee or tea or other liquid products, the creamers provide improved mouthfeel, full body, smooth texture, and also a good flavor with no off-flavor notes developed during storage time.

Though the present invention discloses the coffee creamers, use of the creamers, it is not limited for only coffee applications. For example, the creamers can be also used for other beverages, such as tea or cocoa, or used with cereals or berries, creamers for soups, in many cooking applications, etc.

The products of the invention present excellent organoleptic properties, in particular in terms of texture and mouthfeel even when very low levels of fat are used. Besides, the products of the invention show good stability and can therefore advantageously allow avoiding the use of non-natural additives.

Another aspect of the present invention relates to a process of preparing the creamer comprising:
(i) dissolving the ingredients as defined in claim 1 except oil in hot water under high shear mixing;
(ii) adding oil to the mixture of step (i) under high shear mixing;
(iii) homogenizing the composition at temperature ranging from 70-85°C;
(iv) sterilizing the composition using ultra-high temperature (UHT) treatment;
(v) homogenizing the composition at temperature ranging from 70-85°C; and
(vi) cooling and filing the creamer under aseptic conditions.

### Detailed Description of the Invention

In the following description, the % values are in wt by wt% unless otherwise specified.

Advantageously and unexpectedly, a unique combination of the hydrocolloid texturizing/stabilizing system ingredients was found that improves beverage texture/mouthfeel and provides a pleasant, smooth creamy taste when the creamers added to coffee. In addition, the creamers have good physico-chemical stability during shelf life. The novel hydrocolloid texturizing /stabilizing system includes high acyl gellan gum, lambda carrageenan and carboxymethyl cellulose in the specific ranges, i.e. 0.23 - 0.28, 0.04 - 0.12 and 0.02 - 0.1 wt/wt% respectively. If we use the hydrocolloids outside the above ranges, gelation or phase separation issues (e.g. serum, creaming) will occur (examples within and outside of the ranges are provided below).

In one embodiment of the present invention, the creamer comprises high oleic oils ranging from 6 to 11 wt/wt % of the creamer composition.

For the best mouthfeel, and physico-chemical properties as such and when added to hot coffee, the creamer composition comprises oil between about 6 and 11 wt/wt% of the creamer. Preferably, the unsaturated oil comprises a vegetable oil selected from the group consisting of high oleic canola, high oleic soybean oil, high oleic sunflower, high oleic safflower or a combination thereof.

In one embodiment of the present invention, the creamer comprises caseinate salt ranging from 0.8 to 1.5 wt/wt% of the creamer.

In another embodiment of the present invention, the creamer comprises sugar comprising sucrose, lactose, glucose, fructose and/or combinations ranging from 0-35 wt/wt% of the creamer.

In another embodiment of the present invention, the creamer comprises a sweetener in an amount of about 0.0003 to about 10 wt/wt% of the creamer.

The term "sweetener" includes other plant derived nutritive and non-nutritive sweeteners, and chemically synthesized non-nutritive high intensity sweeteners.

In one embodiment of the present invention, the mean d[4,3] particle size of the creamer is less than 0.3 microns and d(0.9) is less than 0.5 microns as performed using laser diffraction.

The size of particles, expressed in micrometers (µm) for volume mean diameter d[4,3] and d(0,9) of the cumulative distribution measured using Malvern Mastersizer 3000 (laser diffraction unit). Ultra pure and gas free water was prepared using Honeywell water pressure reducer (maximum deionised water pressure: 1 bar) and ERMA water degasser (to reduce the dissolved air in the deionised water).

### Liquid beverage composition and product

A beverage composition according to the invention comprises the creamer as described in the present invention and may be any beverage composition such as e.g. a beverage, e.g. a coffee beverage, a cocoa or chocolate beverage, a malted beverage, a fruit or juice beverage, a carbonated beverage, a soft drink, or a milk based beverage; a performance nutrition product, , powder or ready-to-drink beverage; a medical nutrition product; a dairy product, e.g. a milk drink, a yogurt or other fermented dairy product; a product for improving mental performance or preventing mental decline, or a skin improving product.

### Beverage or beverage composition

A beverage according to the invention comprises the creamer as described in the present invention and may e.g. be in the form of liquid or liquid concentrate to be mixed with a suitable liquid, e.g. water or milk, before consumption, or a ready-to-drink beverage. By a ready-to-drink beverage is meant a beverage in liquid form ready to be consumed without further addition of liquid. A beverage according to the invention may comprise any other suitable ingredients known in the art for producing a beverage, such as e.g. sweeteners, e.g. sugar, such as invert sugar, sucrose, fructose, glucose, or any mixture thereof, natural or artificial sweetener; aromas and flavours, e.g. fruit, cola, coffee, or tea aroma and/or flavour; fruit or vegetable juice or puree; milk; stabilizers; emulsifiers; natural or artificial colour; preservatives; antioxidants, e.g. ascorbic acid; and the like.

If the beverage is a liquid concentrate or a ready-to-use or drink beverage it may be subjected to a heat treatment to increase the shelf life or the product, e.g. by retorting, UHT (Ultra High Temperature) treatment, HTST (High Temperature Short Time) pasteurization, batch pasteurization, or hot fill.

Milk protein containing liquid beverages contain milk (e.g. fluid, fat-removed, lactose-removed, powder, concentrate, fractionated) or the proteins obtained, whether native or modified, from milk, or a mixture thereof.

According to a particular embodiment, the pH is controlled by the presence of a buffer. The buffer comprises disodium phosphate, di-potassium phosphate, sodium or potassium bicarbonate or combinations thereof.

According to a particular embodiment, the product according to the invention comprises 6 to 11 wt/wt% fat, 0.8 to 1.5 wt/wt % protein and 0 to 35 wt/wt% of a sweetening agent and a stabilizing system comprising emulsifiers in an amount of 0.4 to 0.5 wt/wt% and hydrocolloids in an amount of 0.29 to 0.5 wt/wt%.

The reduction of fat in beverages without compromising the indulgent quality of the product is one of the main challenges faced by the industry. The present invention is overcoming this issue in providing low fat products with similar texture and sensory attributes than those having higher fat contents in terms of creaminess and mouthfeel.

The products may thus include a stabilizer system. A "stabilizer system" is to be understood as a mixture of ingredients which contributes to the stability of the beverage product with respect to shelf life, overall texture properties etc. Thus, the stabilizer system may comprise any ingredients which are of physical and functional importance to the beverage. The stabilizer system that may be used in the present products preferably comprises at least one natural emulsifier.

Natural emulsifiers include for example egg yolk, buttermilk, raw acacia gum, rice bran extract or mixtures thereof. The natural emulsifiers have the advantage of conferring to the finished product improved texture and mouthfeel.

According to another particular embodiment, the stabilizer system used in the products of the invention comprises at least one non-natural emulsifier. Any food grade emulsifier typically used in beverage could be used. Suitable emulsifiers include sugar esters, monoglycerides, diglycerides, esters of monoglycerides and diglycerides, lecithin, lysolecithin, polysorbates, sodium stearoyl lactylate and mixtures thereof.

In another embodiment of the present invention, the creamer comprises emulsifiers comprising a mixture of monoglycerides and diglycerides and tartaric acid esters of monoglycerides, wherein the monoglycerides and diglycerides range from 0.1 to 0.125 wt/wt % by weight the creamer composition and wherein the tartaric acid esters of monoglycerides range from 0.3 to 0.375 wt/wt% by weight the creamer composition.

The product may additionally comprise flavours or colorants. These are used in conventional amounts which can be optimized by routine testing for any particular product formulation.

### Examples

The present invention is illustrated further herein by the following nonlimiting examples.

### Example 1.

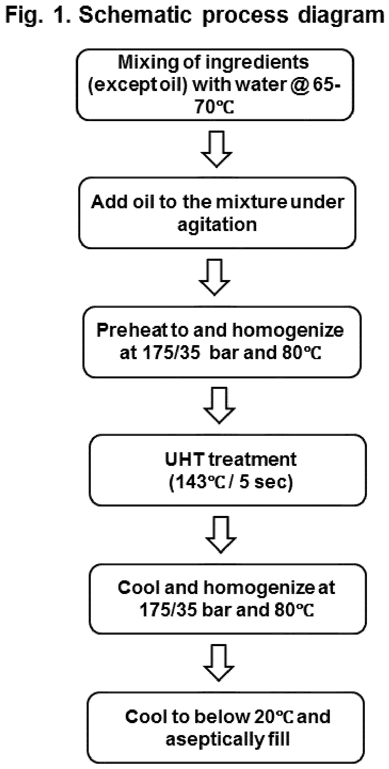

Liquid creamers were produced as below. The process is demonstrated by process diagram (Figure 1).

A dry blend of high acyl gellan gum, carboxymethyl cellulose and lambda - carrageenan with sucrose was prepared by mixing together 5000 g of sucrose with 270 g of high acyl gellan gum, 50 g of lambda carrageenan and 100 g of cellulose compound. The dry blend was added into 50 kg of hot water (∼ 70°C) under high agitation. 400 g of di-potassium phosphate was then added to the tank under continuous agitation.

Next, a dry blend of other powder ingredients was prepared by mixing together 900 g of sodium caseinate, and 350 g of flavours. The dry blend was added to the tank of hot water with above stabilizers under high agitation. After ∼10 minutes of mixing, emulsifiers (110 g of monoglycerides and diglycerides and 325 g of tartaric acid esters of monoglycerides) were added into the tank under continuous high agitation. Further, 8 kg of oil was added under high agitation, followed by 25 kg of sucrose. Additional water was added to adjust the total product amount to 100 kg.

The mixture was preheated and homogenized at 175/35 bar pressure 80°C.

The mixture was further heated and UHT treated for 5 sec at 143 °C.

The mixture was cooled to 80°C and homogenized at 175/35 bar at this temperature and further cooled below 20°C.

The liquid creamer was aseptically filled into bottles. The resultant liquid creamer can be aseptically filled in any aseptic containers such as, for example, jars, jugs or pouches. The liquid creamer was stored 2 month at 38 °C, 4 months at 30 °C and 9 months at room and refrigeration temperatures.

The physico-chemical stability and sensory of creamer and coffee beverages with added liquid creamer were judged by trained panelists. No phase separation (creaming, de-oiling, marbling, etc), gelation, and practically no viscosity changes were found during the storage.

It was surprisingly found that the liquid creamer has good appearance, mouth-feel, smooth texture and a good flavour without off-taste. In addition, the creamer showed high whitening capacity when added to a coffee.

### Example 2

A liquid creamer was prepared as in Example 1 but using 300 g of high acyl gellan gum. The physico-chemical stability and sensory of liquid creamer and coffee beverages with added liquid creamer were judged by trained panelists. After 2-months storage at 30 °C, the sensory evaluation showed severe gelation in the bottle.

### Example 3

A liquid creamer was prepared as in Example 1 but using 210 g of high acyl gellan gum. The physico-chemical stability and sensory of liquid creamer and coffee beverages with added liquid creamer were judged by trained panelists. After 2-months storage at 30 °C, the sensory evaluation showed unacceptable phase separation (syneresis, creaming).

### Example 4

A liquid creamer was prepared as in Example 1 but using 10 g of lambda-carrageenan. The physico-chemical stability and sensory of liquid creamer and coffee beverages with added liquid creamer were judged by trained panelists. After 2-months storage at 30 °C, the sensory evaluation showed unacceptable phase separation (syneresis, creaming).

### Example 5

A liquid creamer was prepared as in Example 1 but using 120 g of lambda-carrageenan. The physico-chemical stability and sensory of liquid creamer and coffee beverages with added liquid creamer were judged by trained panelists. After 2-months storage at 30 °C, the sensory evaluation showed severe gelation in the bottle.

### Example 6

A liquid creamer was prepared as in Example 1 but using 150 g of carboxymethyl cellulose. The physico-chemical stability and sensory of liquid creamer and coffee beverages with added liquid creamer were judged by trained panelists. After 2-months storage at 30 °C, the sensory evaluation showed severe gelation in the bottle.

### Example 7

A liquid creamer was prepared as in Example 1 but using 20 g of carboxymethyl cellulose. The physico-chemical stability and sensory of liquid creamer and coffee beverages with added liquid creamer were judged by trained panelists. After 2-months storage at 30 °C, the sensory evaluation showed unacceptable phase separation (syneresis, creaming) and too thin texture/mouthfeel.

### Example 8

A liquid creamer was prepared as in Example 1 but using 1000 g of sodium caseinate. The physico-chemical stability and sensory of liquid creamer and coffee beverages with added liquid creamer were judged by trained panelists. After 7-months storage at 20 °C, the sensory evaluation showed that the liquid creamer has good appearance, mouth-feel, smooth texture and a good flavour without off-taste. In addition, the creamer showed high whitening capacity when added to a coffee.

### Example 9

A liquid creamer was prepared as in Example 1 but using 700 g of sodium caseinate. The physico-chemical stability and sensory of liquid creamer and coffee beverages with added liquid creamer were judged by trained panelists. After 3-months storage at 30 °C, the sensory evaluation showed unacceptable phase separation (syneresis, creaming).

### Example 10

A liquid creamer was prepared as in Example 1 but using 1.6 kg of sodium caseinate. The physico-chemical stability and sensory of liquid creamer and coffee beverages with added liquid creamer were judged by trained panelists. After 3-months storage at 30 °C, the visual evaluation showed formation of white specks.

### Example 11

A liquid creamer was prepared as in Example 1 but using 120 g of monoglycerides and diglycerides. The physico-chemical stability and sensory of liquid creamer and coffee beverages with added liquid creamer were judged by trained panelists. After 7-months storage at 20°C, the sensory evaluation that the liquid creamer has good appearance, mouth-feel, smooth texture and a good flavour without off-taste. In addition, the creamer showed high whitening capacity when added to a coffee.

### Example 12

A liquid creamer was prepared as in Example 1 but using 50 g of monoglycerides and diglycerides. The physico-chemical stability and sensory of liquid creamer and coffee beverages with added liquid creamer were judged by trained panelists. After 7-months storage at 20°C, the sensory evaluation showed fat separation in the bottle.

### Example 13

A liquid creamer was prepared as in Example 1 but using 150 g of monoglycerides and diglycerides. The physico-chemical stability and sensory of liquid creamer and coffee beverages with added liquid creamer were judged by trained panelists. After 7-months storage at 20 °C, the sensory evaluation showed de-oiling issues when the creamer was added to coffee.

### Example 14

A liquid creamer was prepared as in Example 1 but using 350 g of monoglycerides and diglycerides and tartaric acid esters of monoglycerides. The physico-chemical stability and sensory of liquid creamer and coffee beverages with added liquid creamer were judged by trained panelists. After 7-months storage at 20°C, the sensory evaluation showed that the liquid creamer has good appearance, mouth-feel, smooth texture and a good flavour without "off" taste. In addition, the creamer showed high whitening capacity when added to a coffee.

### Example 15

A liquid creamer was prepared as in Example 1 but using 250 g of monoglycerides and diglycerides and tartaric acid esters of monoglycerides. The physico-chemical stability and sensory of liquid creamer and coffee beverages with added liquid creamer were judged by trained panelists. After 7-months storage at 20°C, the sensory evaluation showed fat separation in the bottle.

### Example 16

A liquid creamer was prepared as in Example 1 but using 400 g of monoglycerides and diglycerides and tartaric acid esters of monoglycerides. The physico-chemical stability and sensory of liquid creamer and coffee beverages with added liquid creamer were judged by trained panelists. After 7-months storage at 20°C, the sensory evaluation showed de-oiling issues when the creamer was added to coffee.

### Example 17

A liquid creamer was prepared as in Example 1 but using 9 kg of high oleic oil. The physico-chemical stability and sensory of liquid creamer and coffee beverages with added liquid creamer were judged by trained panelists. After 7-months storage at 20°C, the sensory evaluation showed that the liquid creamer has good appearance, mouth-feel, smooth texture and a good flavor without off-taste. In addition, the creamer showed high whitening capacity when added to a coffee. The mean d[4,3] particle size of oil-in-water emulsion was 0.25 microns and d(0.9) was 0.45 microns.

### Example 18

A liquid creamer was prepared as in Example 1 but using 5 kg of high oleic oil. The physico-chemical stability and sensory of liquid creamer and coffee beverages with added liquid creamer were judged by trained panelists. The sensory evaluation showed watery texture as well as low whitening capacity of coffee with added creamer.

### Example 19

A liquid creamer was prepared as in Example 1 but using 12 kg of high oleic oil. The physico-chemical stability and sensory of liquid creamer and coffee beverages with added liquid creamer were judged by trained panelists. After 7-months storage at 20 °C, the sensory evaluation showed creamer phase separation (creaming). The mean D[4,3] particle size of oil-in-water emulsion was 0.4 microns and d(0.9) was 0.6 microns.

### Example 20

CML was produced (see attached process diagram) using different high acyl gellan gum concentration and constant level of lambda-carrageenan (0.05 w/w%) and carboxymethyl cellulose (0.05 w/w%).

**Table 1. Effect of high acyl gellan gum concentration on product physical stability and texture/mouthfeel**

| | | | | | |
|---|---|---|---|---|---|
| **High acyl gellan gum concentration (w/w%)** | 0.21 | 0.23 | 0.25 | 0.28 | 0.30 |
| **Physical stability** | Unacceptable: phase separation (syneresis, creaming) | Homogeneous | Homogeneous | Homogeneous | Unacceptable: gelation |
| **Texture/mouthfeel** | Acceptable | Good | Good | Very good | Very good |

Creamers with high acyl gellan gum concentration below 0.23 leads to phase separation and creamers with high acyl gellan gum concentration above 0.28 leads to gelation.

### Example 21.

CML was produced (see attached process diagram) using different lambda-carrageenan concentration and constant level of high acyl gellan gum (0.25 w/w%) and carboxymethyl cellulose (0.05 w/w%).

**Table 2. Effect of lambda-carrageenan concentration on product physical stability and texture/mouthfeel**

| | | | | | |
|---|---|---|---|---|---|
| **lambda-carrageenan concentration (w/w%)** | 0.01 | 0.02 | 0.08 | 0.10 | 0.12 |
| **Physical stability** | Unacceptable: phase separation (syneresis, creaming) | Homogeneous | Homogeneous | Homogeneous | Unacceptable: severe gelation |
| **Texture/mouthfeel** | Too thin | Good | Good | Very good | Gummy mouthfeel |

### Example 22.

CML was produced (see attached process diagram) using different carboxymethyl cellulose concentration and constant level of high acyl gellan gum (0.25 w/w%) and lambda-carrageenan (0.05 w/w%).

**Table 3. Effect of carboxymethyl cellulose concentration on product physical stability and texture/mouthfeel**

| | | | | | |
|---|---|---|---|---|---|
| **carboxymethyl cellulose concentration (w/w%)** | 0.02 | 0.04 | 0.08 | 0.12 | 0.15 |
| **Physical stability** | Unacceptable: severe phase separation (syneresis, creaming) | Homogeneous | Homogeneous | Homogeneous | Unacceptable: gelation |
| **Texture/mouthfeel** | Too thin | Acceptable | Good | Good | Slimy mouthfeel |

## Claims

1. A liquid non-dairy creamer composition comprising
high oleic oils; caseinate salts; emulsifiers; and
wherein further **characterized in that** the creamer comprises
hydrocolloids comprising lambda-carrageenan, high acyl gellan gum and carboxymethyl cellulose wherein the lambda-carrageenan ranges from 0.02 to 0.1 wt/wt%, high acyl gellan gum ranges from from 0.23 to 0.28 wt/wt% and carboxymethyl cellulose ranges from 0.04 to 0.12 wt/wt% of the creamer.

2. The creamer of claim 1 wherein the high oleic oils range from 6 to 11 wt/wt % of the creamer.

3. The creamer of claims 1 or 2 wherein the high oleic oils comprises a vegetable oil selected from the group consisting of high oleic canola, high oleic soybean oil, high oleic sunflower, high oleic safflower or a combination thereof.

4. The creamer of claim 1 wherein caseinate salts range from 0.8 to 1.5 wt/wt% of the creamer.

5. The creamer of claim 1 wherein emulsifiers comprising a mixture of monoglycerides and diglycerides and tartaric acid esters of monoglycerides, wherein the monoglycerides and diglycerides range from 0.1 to 0.125 wt/wt % of the creamer and wherein the tartaric acid esters of monoglycerides range from 0.3 to 0.375 wt/wt% of the creamer.

6. The creamer of claim 1, further comprises sugar comprising sucrose, lactose, glucose, fructose and/or combinations ranging from 0 to 35 wt/wt % of the creamer.

7. The creamer according to any of the preceding claims, further includes a buffer .

8. The creamer according to claim 1, wherein the mean d[4,3] particle size of the creamer is less than 0.3 microns and d(0.9) is less than 0.5 microns.

9. A beverage comprising the creamer according to any one of the preceding claims.

10. The beverage of claim 9 is a coffee, tea, or chocolate.

11. A process of preparing the creamer of claim 1 comprising:
(i) dissolving the ingredients as defined in claim 1 except oil in hot water under high shear mixing;
(ii) adding oil to the mixture of step (i) under high shear mixing;
(iii) homogenizing the composition at temperature ranging from 70-85°C;
(iv) sterilizing the composition using ultra-high temperature (UHT) treatment;
(v) homogenizing the composition at temperature ranging from 70-85°C;
and
(vi) cooling and filing the creamer under aseptic conditions.

## Patentansprüche

1. Flüssige, milchfreie Kaffeeweißerzusammensetzung, die Folgendes umfasst Öle mit hohem Ölsäuregehalt; Kaseinatsalze; Emulgatoren; und
ferner **dadurch gekennzeichnet, dass** der Kaffeeweißer Folgendes umfasst Hydrokolloide, die Lambda-Carrageenan, Gellangummi mit hohen Acylanteil und Carboxymethylcellulose umfassen, wobei das Lambda-Carrageenan im Bereich von 0,02 bis 0,1 Gew.-% vorliegt, das Gellangummi mit hohem Acylgehalt im Bereich von 0,23 bis 0,28 Gew.-% vorliegt und die Carboxymethylcellulose im Bereich von 0,04 bis 0,12 Gew.-% vorliegt, jeweils bezogen auf das Gewicht des Kaffeeweißers.

2. Kaffeeweißer nach Anspruch 1, wobei die Öle mit hohem Ölsäuregehalt im Bereich von 6 bis 11 Gew.-%, bezogen auf das Gewicht des Kaffeeweißers, vorliegen.

3. Kaffeeweißer nach Anspruch 1 oder 2, wobei die Öle mit hohem Ölsäuregehalt ein pflanzliches Öl umfassen, das ausgewählt ist aus der Gruppe bestehend aus Raps mit hohem Ölsäuregehalt, Sojabohnenöl mit hohem Ölsäuregehalt, Sonnenblume mit hohem Ölsäuregehalt, Distel mit hohem Ölsäuregehalt oder einer Kombination davon.

4. Kaffeeweißer nach Anspruch 1, wobei Kaseinatsalze im Bereich von 0,8 bis 1,5 Gew.-%, bezogen auf das Gewicht des Kaffeeweißers, vorliegen.

5. Kaffeeweißer nach Anspruch 1, wobei die Emulgatoren eine Mischung aus Monoglyceriden und Diglyceriden und Weinsäureestern von Monoglyceriden umfasst, wobei die Monoglyceride und Diglyceride im Bereich von 0,1 bis 0,125 Gew.-%, bezogen auf das Gewicht des Kaffeeweißers, vorliegen, und wobei die Weinsäureester von Monoglyceriden im Bereich von 0,3 bis 0,375 Gew.-%, bezogen auf das Gewicht des Kaffeeweißers, vorliegen.

6. Kaffeeweißer nach Anspruch 1, der ferner Zucker umfasst, der Saccharose, Lactose, Glucose, Fructose und/oder Kombinationen im Bereich von 0 bis 35 Gew.-%, bezogen auf das Gewicht des Kaffeeweißers, umfasst.

7. Kaffeeweißer nach einem der vorstehenden Ansprüche, der ferner einen Puffer enthält.

8. Kaffeeweißer nach Anspruch 1, wobei die mittlere d[4,3]-Teilchengröße des Kaffeeweißers kleiner als 0,3 Mikrometer und d(0,9) kleiner als 0,5 Mikrometer ist.

9. Getränk, das den Kaffeeweißer nach einem der vorstehenden Ansprüche umfasst.

10. Getränk nach Anspruch 9, bei dem es sich um Kaffee, Tee oder Schokolade handelt.

11. Verfahren zur Herstellung des Kaffeeweißers nach Anspruch 1, das Folgendes umfasst:
(i) Lösen der Inhaltsstoffe, wie in Anspruch 1 definiert, mit Ausnahme von Öl, in heißem Wasser unter Hochschermischen;
(ii) Hinzufügen von Öl zu der Mischung aus Schritt (i) unter Hochschermischen;
(iii) Homogenisieren der Zusammensetzung bei einer Temperatur im Bereich von 70-85 °C;
(iv) Sterilisieren der Zusammensetzung unter Anwendung einer Ultrahocherhitzungsbehandlung (UHT-Behandlung);
(v) Homogenisieren der Zusammensetzung bei einer Temperatur im Bereich von 70-85 °C; und
(vi) Abkühlen und Abfüllen des Kaffeeweißers unter aseptischen Bedingungen.

## Revendications

1. Composition de succédané de crème liquide non lacté comprenant
des huiles à haute teneur en acide oléique ; des sels de caséinate ; des émulsifiants ; et
dans laquelle elle est en outre **caractérisée en ce que** le succédané de crème comprend
des hydrocolloïdes comprenant du lambda-carraghénane, de la gomme gellane hautement acylée et de la carboxyméthylcellulose, dans laquelle le lambda-carraghénane va de 0,02 à 0,1 % en poids/poids, la gomme gellane hautement acylée va de 0,23 à 0,28 % en poids/poids et la carboxyméthylcellulose va de 0,04 à 0,12 % en poids/poids du succédané de crème.

2. Succédané de crème selon la revendication 1, dans lequel les huiles à haute teneur en acide oléique vont de 6 à 11 % en poids/poids du succédané de crème.

3. Succédané de crème selon les revendications 1 ou 2, dans lequel les huiles à haute teneur en acide oléique comprennent une huile végétale choisie dans le groupe constitué de canola à haute teneur en acide oléique, huile de soja à haute teneur en acide oléique, tournesol à haute teneur en acide oléique, carthame à haute teneur en acide oléique ou une combinaison de celles-ci.

4. Succédané de crème selon la revendication 1, dans lequel les sels de caséinate vont de 0,8 à 1,5 % en poids/poids du succédané de crème.

5. Succédané de crème selon la revendication 1, dans lequel les émulsifiants comprennent un mélange de monoglycérides et diglycérides et des esters d'acide tartrique de monoglycérides, dans lequel les monoglycérides et diglycérides vont de 0,1 à 0,125 % en poids/poids du succédané de crème et dans lequel les esters d'acide tartrique de monoglycérides vont de 0,3 à 0,375 % en poids/poids du succédané de crème.

6. Succédané de crème selon la revendication 1, qui comprend en outre un sucre comprenant du saccharose, du lactose, du glucose, du fructose et/ou des combinaisons allant de 0 à 35 % en poids/poids du succédané de crème.

7. Succédané de crème selon l'une quelconque des revendications précédentes, qui inclut en outre un tampon.

8. Succédané de crème selon la revendication 1, dans lequel la taille moyenne de particules d[4,3] du succédané de crème est inférieure à 0,3 micromètre et la d(0,9) est inférieure à 0,5 micromètre.

9. Boisson comprenant le succédané de crème selon l'une quelconque des revendications précédentes.

10. Boisson selon la revendication 9, qui est un café, un thé ou un chocolat.

11. Procédé de préparation du succédané de crème selon la revendication 1, comprenant:
(i) la dissolution des ingrédients tels que définis dans la revendication 1, à l'exception de l'huile, dans de l'eau chaude sous mélange par cisaillement élevé ;
(ii) l'ajout d'huile au mélange de l'étape (i) sous mélange par cisaillement élevé ;
(iii) l'homogénéisation de la composition à une température allant de 70 à 85 °C ;
(iv) la stérilisation de la composition en utilisant un traitement à ultra-haute température (UHT) ;
(v) l'homogénéisation de la composition à une température allant de 70 à 85 °C ; et
(vi) le refroidissement et le remplissage du succédané de crème dans des conditions aseptiques.
